(19) **Europäisches Patentamt**
**European Patent Office**
**Office européen des brevets**

(11) **EP 2 645 614 B1**

(12) **EUROPEAN PATENT SPECIFICATION**

(45) Date of publication and mention
of the grant of the patent:
**27.10.2021 Bulletin 2021/43**

(51) Int Cl.:
***H04L 1/00*** *(2006.01)*

(21) Application number: **13161384.6**

(22) Date of filing: **27.03.2013**

(54) **Dynamic uplink resource allocation method and apparatus**

Verfahren und Vorrichtung zur dynamischen Zuweisung von Uplink-Ressourcen

Procédé et appareil d'attribution dynamique de ressources de liaison montante

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.03.2012 KR 20120031132**

(43) Date of publication of application:
**02.10.2013 Bulletin 2013/40**

(73) Proprietor: **Samsung Electronics Co., Ltd.
Gyeonggi-do 443-742 (KR)**

(72) Inventors:
 • **Hong, Kiseob
   443-742 Gyeonggi-do (KR)**
 • **Lee, Hyunwoo
   443-742 Gyeonggi-do (KR)**
 • **Cho, Jaehee
   443-742 Gyeonggi-do (KR)**

(74) Representative: **Nederlandsch Octrooibureau
P.O. Box 29720
2502 LS The Hague (NL)**

(56) References cited:
 **US-A1- 2009 258 665     US-A1- 2010 216 472
 US-A1- 2012 040 709**

 • **None**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The present disclosure relates to a dynamic resource allocation and apparatus for use in a wireless communication system and, in particular, to a method and apparatus for determining Modulation and Coding Scheme (MCS) level dynamically based on an MCS index table in a wireless communication system.

**BACKGROUND**

Researches are being conducted to provide users with various services requiring various data transmission capacities in the 4th Generation (4G) communication system. In the 4G communication system, particularly, the studies are focused on the support of high data rate service, while guaranteeing mobility and service quality for the Broadband Wireless Access communication.

The communication system based on the Institute of Electrical and Electronics Engineers (IEEE) 802.16 standard is one of the representative 4G communication systems. The IEEE 802.16 standard communication system adopts Orthogonal Frequency Division Multiplexing (OFDM) / Orthogonal Frequency Division Multiple Access (OFDMA).

In the wideband wireless communication system such as WiMAX, data transmission is performed in unit of frame which is divided into a downlink (DL) and uplink (UL) data transmission regions. The UL data transmission region is formed as a 2-Dimentional (2D) arrangement in time and frequency and consists of slots. Each slot is allocated to one of the Mobile Stations located in the same sector, and a set of the slots allocated to the MSs within a sector is referred to as burst.

In the aforementioned WiMAX communication system, the uplink radio resource is allocated in unit of slot to the MSs based on Modulation and Coding Scheme (MCS).

US 2010/216472 A1 discloses a base station is capable of performing a method for scheduling in a wireless communication system. In the method, a downlink channel measurement value received from a terminal is compared with a threshold. When the downlink channel measurement value is smaller than the threshold, an activation set for a handover of the terminal is determined. When the number of base stations inside the activation set is two or more, a Modulation and Coding Scheme (MCS) level is allocated to the terminal with consideration of the downlink channel measurement value. A wireless resource is allocated to the terminal with consideration of the allocated MCS level and a headroom of the terminal.

**SUMMARY**

To address the above-discussed deficiencies of the prior art, it is a primary object to provide a method and apparatus for selecting an uplink MCS index table dynamically in consideration of the number of users and uplink resource utilization amount. The invention is defined by the appended claims.

In accordance with an aspect of the present disclosure, a dynamic uplink resource allocation method is provided according to appended claim 1.

In accordance with another aspect of the present disclosure, a base station is provided according to appended claim 9.

Before undertaking the DETAILED DESCRIPTION OF THE DISCLOSURE below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

**BRIEF DESCRIPTION OF THE DRAWINGS**

For a more complete understanding of the present disclosure and its advantages, reference is now made to the following description taken in conjunction with the accompanying drawings, in which like reference numerals represent like parts:

FIG. 1 is a graph for explaining an uplink MCS determination procedure based on the uplink transmission power in Frequency Reuse Pattern (FRP) 3;

FIG. 2 is a graph illustrating the principle of determining the uplink MCS index table in the dynamic uplink resource allocation method according to an embodiment of the present disclosure;

FIG. 3 is a block diagram illustrating the configuration of a dynamic UL resource allocation apparatus according to an embodiment of the present disclosure;

FIG. 4 is a flowchart illustrating the MCS level determination procedure of the UL resource allocation method according to an embodiment of the present disclosure;

FIG. 5 is a diagram illustrating a set of MCS table indices for use in the UL resource allocation method according to an embodiment of the present disclosure;

FIG. 6 is a flowchart illustrating the dynamic UL resource allocation method according to an embodiment of the present disclosure; and

FIGs. 7a and 7b are a flowchart illustrating the dynamic UL resource allocation method according to another embodiment of the present disclosure.

## DETAILED DESCRIPTION

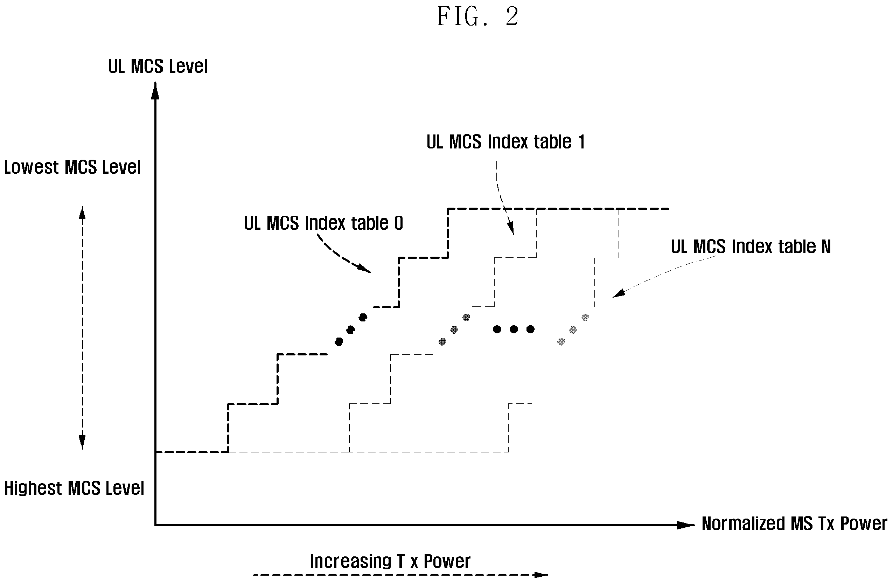

FIGURES 2 through 7b, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless technologies. Exemplary embodiments of the present disclosure are described with reference to the accompanying drawings in detail. The same reference numbers are used throughout the drawings to refer to the same or like parts. Detailed description of well-known functions and structures incorporated herein may be omitted to avoid obscuring the subject matter of the present disclosure.

In the aforementioned WiMAX communication system, the uplink radio resource is allocated in unit of slot to the MSs based on Modulation and Coding Scheme (MCS).

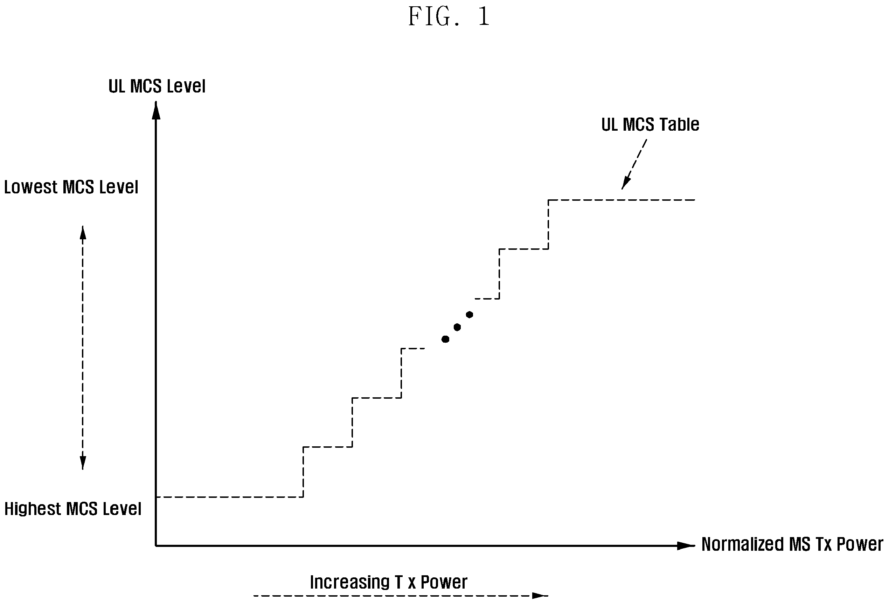

A description is made of a MCS determination procedure hereinafter with reference to FIG. 1.

FIG. 1 is a graph for explaining an uplink MCS determination procedure based on the uplink transmission power in Frequency Reuse Pattern (FRP) 3. The base station first normalizes the uplink transmission powers of all Mobile Stations (MS) into the uplink transmission power for the case where all MSs use the same uplink MCS and radio resource. Afterward, the base station compares the normalized uplink transmission power with a predetermined MCS threshold.

In FIG. 1, the UL MCS table denotes a set of thresholds necessary for converting the normalized UL transmission power to an MCS level. The UL MCS level is determined at the crossing point with the UL transmission power in UL MCS table. However, since only one set of MCS thresholds, i.e. one UL MCS table, is used for determining the MCS level, it is difficult to adjust the uplink spectral efficiency in adaptation to the uplink condition. Since the MCS threshold value is fixed and limited to the UE transmission power, it is also difficult to increases the signal user throughput and the sector throughput simultaneously. That is, if an MCS threshold which guides aggressive MCS level determination is used, this is likely to decrease both the single user throughput and sector throughput in the situation of small number of users and low UL resource utilization. In contrast, if an MCS threshold which leads to the conservative MCS level determination, this is likely to decrease the sector throughput despite of the increase of the signal user throughput in the situation of large number of users and high UL resource utilization.

FIG. 2 is a graph illustrating the principle of determining the uplink MCS index table in the dynamic uplink resource allocation method according to an embodiment of the present disclosure.

FIG. 2 shows how to determine the UL MCS level using the MCS threshold according to the MCS index table. The base station first normalizes the transmission power of a Mobile Station (MS) to the UL transmission power in the case that all MSs use and same radio resource at the same UL MCS level.

Unlike the technique operating with a single MCS index table, the dynamic UL resource allocation method according to an embodiment of the present disclosure operates with plural MCS table indices. Accordingly, it is possible to select one of uplink MCS table indices in consideration of the number of users and UL resource utilization amount. The MCS index table selection method is described in detail hereinafter.

Here, the MCS index tables are assigned unique MCS index table numbers and if N MCS index table exists, this means that N MCS index table numbers exist. The MCS index table number is allocated in an order of MCS index table guiding selection of the most conservative MCS level to the MCS index table guiding selection of the most aggressive MCS level or in reverse order. In the present disclosure, the more conservative MCS level-oriented the MCS index table is, the less the MCS index table number is; and the more aggressive MCS level-oriented the MCS index table is, the greater the MCS index table number is.

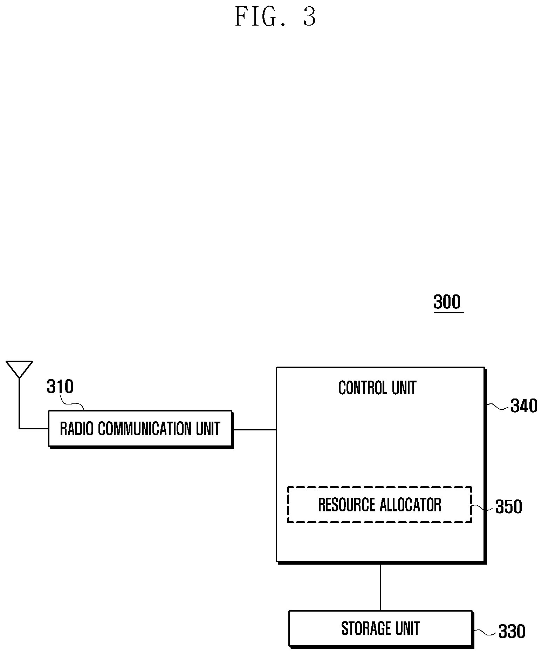

FIG. 3 is a block diagram illustrating a dynamic UL resource allocation apparatus according to an embodiment of the present disclosure. As shown in FIG. 3, the dynamic UL resource allocation apparatus 300 includes a radio communication unit 310, a storage unit 330, and a control unit 340.

The radio communication unit 310 is capable of transmitting and receiving data to and from an MS. In an embodiment of the present disclosure, the radio communication unit 310 receives UL transmission power report from the MS and sends the MS a slot allocation prediction result corresponding to the selected MCS index table as allocation information.

The storage unit 330 stores data. In an embodiment of the present disclosure, the storage unit 330 stores at least one MCS index table.

The control unit 340 normalizes the UL transmission power, selects currently MCS index table, and controls determining MCS level based on the normalized UL transmission power and the selected MCS index table. In order to achieve this, the control unit 340 includes a resource allocator 350 according to an embodiment of the present disclosure.

As described above, the base station is capable of selecting an MCS index table capable of optimizing the network throughput in consideration of the number of users and UL resource utilization amount among plural MCS table indices.

The resource allocator 350 calculates a utility metric per index table which indicates the total data amount that can be transmitted with the allocated resource based on the resource allocation amount and the data amount transmittable per unit resource in selecting the MCS index table, determines whether the current utility matric calculated using the currently used MCS index table is equal to or greater than all candidate utility metrics calculated using the respective candidate MCS index tables, and controls maintaining, when the current utility metric is equal to or greater than all candidate utility metrics, the current MCS table.

At this time, the utility metric is determined by Equation (1):

$$UtilityMetric = \sum_{user\,i} (ScheduleSlot)_{user\,i} \times (MPR[MCS_{user\,i}]) \qquad (1)$$

where ScheduleSlot$_{user\,i}$ denotes per-user slot allocation prediction result, and MPR[MCS$_{user\,i}$] denotes Modulation order Product Coding Rate (MPR) corresponding to the per-user MCS level.

That is, ScheduleSlot$_{user\,i}$ corresponds to the resource allocation amount and MPR denotes the data amount transmittable per unit resource and, as a consequence, the utility metric is total data amount transmittable on the allocated resource according to Equation (1).

If the current utility metric is less than any of all candidate utility metrics, the resource allocator 350 controls to select the candidate MCS index table having a candidate utility metric fulfilling a predetermined condition.

The resource allocator 350 is also capable of determining the next frame candidate MCS index table to be compared with the MCS index table selected in the next frame. The resource allocator 350 determines whether the current MCS index table has changed in determining next frame candidate MCS index table and controls, if the current MCS index table has been changed, to change the candidate MCS index table according to the selected MCS index table.

At this time, if the selected MCS index table has been changed to have more conservative MCS level as compared to the current MCS index table, the resource allocator 350 changes the candidate MCS index table to have more conservative MCS level as compared to the selected MCS index table. Otherwise, if the selected MCS has been changed to have more aggressive MCS level as compared to the current MCS index table, the resource allocator 350 changes the candidate MCS index table to have more aggressive MCS level as compared to the selected MCS index table. The resource allocator 350 is also capable of controlling to maintain the current candidate MCS index table, when the current MCS index table has not been changed.

Through the above procedure, the base station is capable of selecting an optimal MCS index table dynamically by reflecting the number of users and UL resource utilization ratio that are varying as time goes. Although it is ideal to calculate the utility metrics of all MCS index tables at every frame and select the MCS index table having the greatest utility metric, it is effective to select an appropriate MCS index table among the candidate MCS index table indices and the current MCS index table by taking notice of the restricted computing power of the control unit 340.

The resource allocator 350 determines the MCS level using the selected MCS index table.

Although the description is directed to the case whether the resource allocator 350 is formed as a function block separated from the control unit 340, this configuration is only for the sake of convenience of explanation. For example, the function of the resource allocator 350 can be performed by the control unit 340.

In the following, the description is made under the assumption that the control unit 340 performs the function of the resource allocator 350.

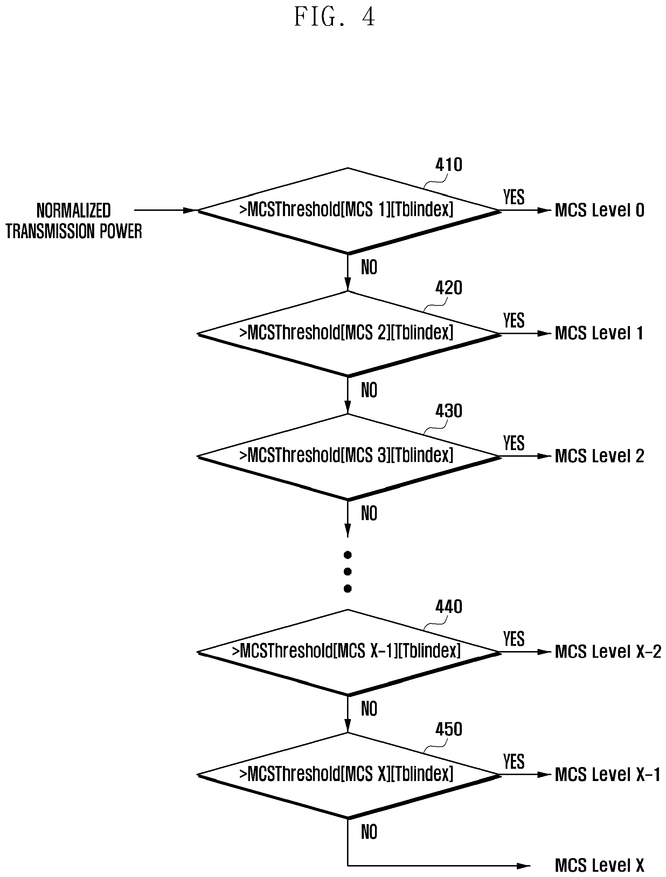

A description is made of the MCS level determination procedure in more detail with reference to FIG. 4.

FIG. 4 is a flowchart illustrating the MCS level determination procedure of the UL resource allocation method according to an embodiment of the present disclosure.

Since the MCS index table (TblIndex) is a set of UL MCS thresholds, if an MCS index table is selected, an MCS threshold set is determined automatically by the MCS index table.

First, the base station compares the normalized transmission power with the threshold value of MCS level 1 (MCSThreshold[MCS 1][TblIndex]) at step 410 and, if the normalized transmission power is greater than the MCS level 1 threshold value, sets the MCS level to MCS level 0. Otherwise, if the normalized transmission power is equal to or less than the MCS level 1 threshold value, the base station compares the normalize transmission power with the threshold value of MCS level 2 (MCSThreshold[MCS 2][TblIndex]) at step 420 and, if the normalized transmission power is greater than the MCS level 2, sets the MCS level to MCS level 1 and, otherwise, the procedure goes to step 430. This configuration is repeated in stepwise manner such that if the normalized transmission power is equal to or less than minimum MCS level X, the MCS level is set to MCS level X.

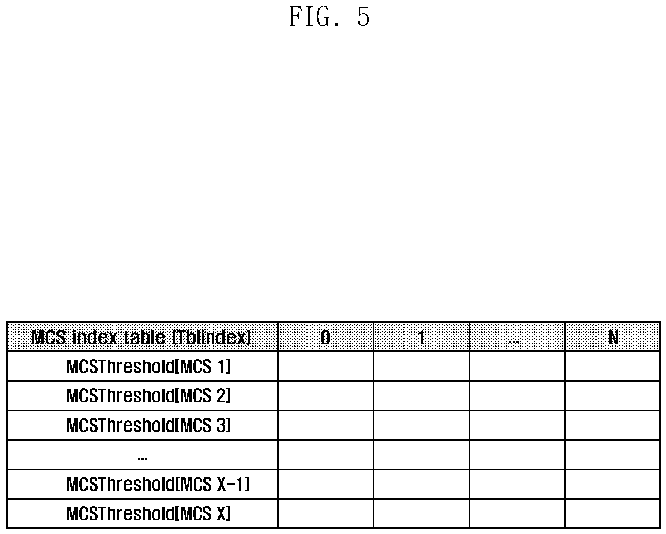

The MCS threshold set necessary for determining the MCS level as described above is the MCS index table. A set of MCS index tables is summarized in FIG. 5.

FIG. 5 is a diagram illustrating a set of MCS index tables for use in the UL resource allocation method according to an embodiment of the present disclosure.

In FIG. 5, N+1 MCS index table are listed and are assigned unique MCS index table numbers of from 0 to N respectively. As described above, the more conservative MCS level-oriented the MCS index table is; and the more aggressive MCS level-oriented the MCS index table is, the greater the MCS index table number is. Although the description is directed to the case where the MCS threshold value diminishes as the MCS level grows from [MCS 1] to [MCS X] in an embodiment of the present disclosure, the MCS level determination can be performed in the course that MCS threshold value ascends.

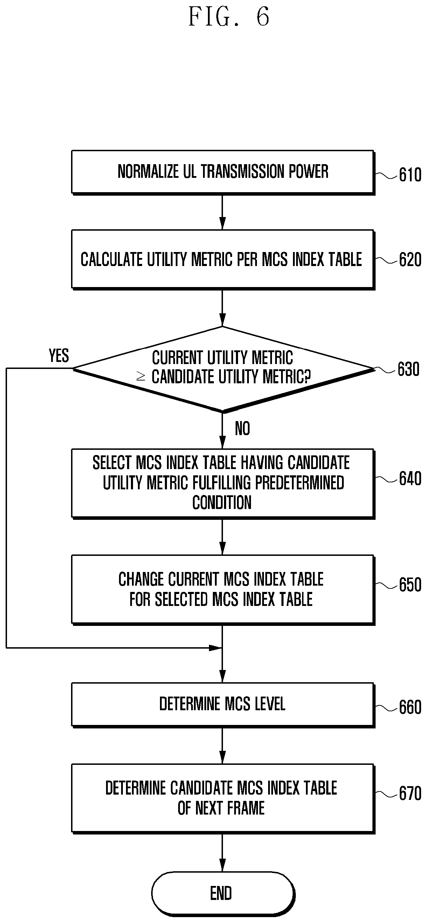

FIG. 6 is a flowchart illustrating the dynamic UL resource allocation method according to an embodiment of the present disclosure.

First, the control unit 340 normalizes the uplink transmission power at step 610. At this time, the control unit 340 normalizes the transmission power of an MS to the UL transmission power in the case that all MSs use and same radio resource at the same UL MCS level.

Afterward, the control unit 340 calculates utility metric indicating the total data amount transmittable with the allocated resource using the resource allocation amount per MCS index table and the data amount transmittable per unit resource. Since the utility metric indicates the total data amount transmittable with the allocated resource, the total transmittable data amount increases in proportion to the value of the utility metric, resulting in improvement of service quality.

At this time, the utility metric is determined by Equation (1).

That is, $ScheduleSlot_{user\ i}$ corresponds to the resource allocation amount and MPR denotes the data amount transmittable per unit resource and, as a consequence, the utility metric is total data amount transmittable on the allocated resource according to Equation (1).

Next, the control unit 230 determines whether the current utility metric calculated with the currently used MCS index table is equal to or greater than all candidate utility metrics calculated with respective MCS index tables at step 630.

If the current utility metric is equal to or greater than all individual candidate utility metrics, the control unit 304 maintains the current MCS table and determines the MCS level using the UL transmission power and selected MCS table as described above at step 660. If the current utility metric is less than any of all candidate utility metrics, the control unit 340 selects the candidate MCS index table having the candidate utility metric fulfilling a predetermined condition at step 640. Next, the control unit 340 changes the current MCS index table for the selected MCS index table at step 650 and determines the MCS level using the UL transmission power and selected MCS index table as described above at step 660.

Afterward, the control unit 340 determines the candidate MCS index table of the next frame at step 670. The control unit 340 determines whether the current MCS index table has been changed in determining the next frame candidate MCS index table and, if so, changes the candidate MCS index table for the selected MCS index table at step 650.

If the selected MCS index table has been changed to have more conservative MCS level than that of the current MCS index table, the control unit 340 changes the candidate MCS index table to have the more conservative MCS level than that of the selected MCS index table. Otherwise, if the selected MCS index table is has been changed to have more aggressive MCS level than that of the current MCS index table, the control unit 340 changes the candidate MCS index table to have the more aggressive MCS level than that of the selected MCS index table.

If it is determined that the current MCS index table has not been changed in determining the next frame candidate MCS index table at step 650, the control unit 340 controls to maintain the current MCS index table.

Once the current MCS index table is determined through the above procedure, it is also possible to determine the candidate MCS index table of the next frame. In this way, the base station is capable of selecting the MCS index table dynamically in adaptation to the current situation.

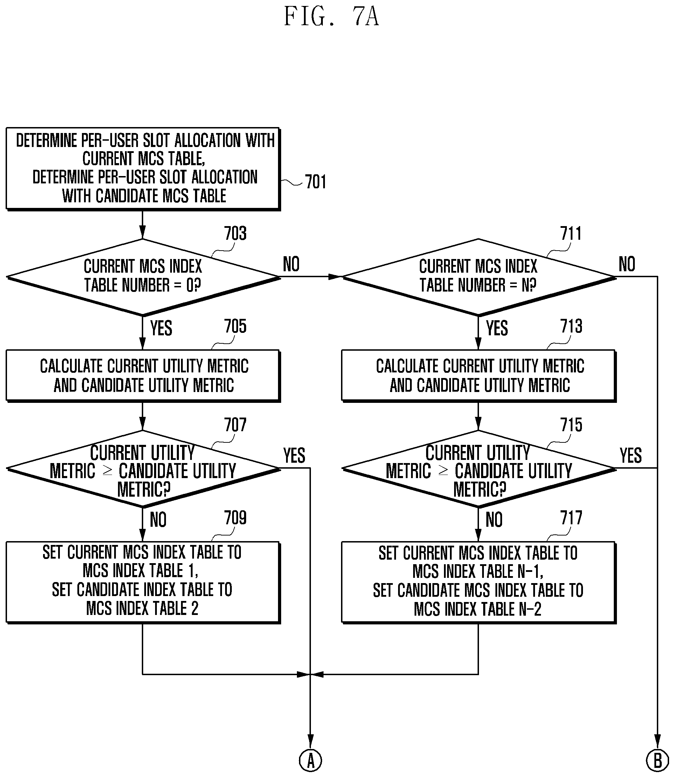

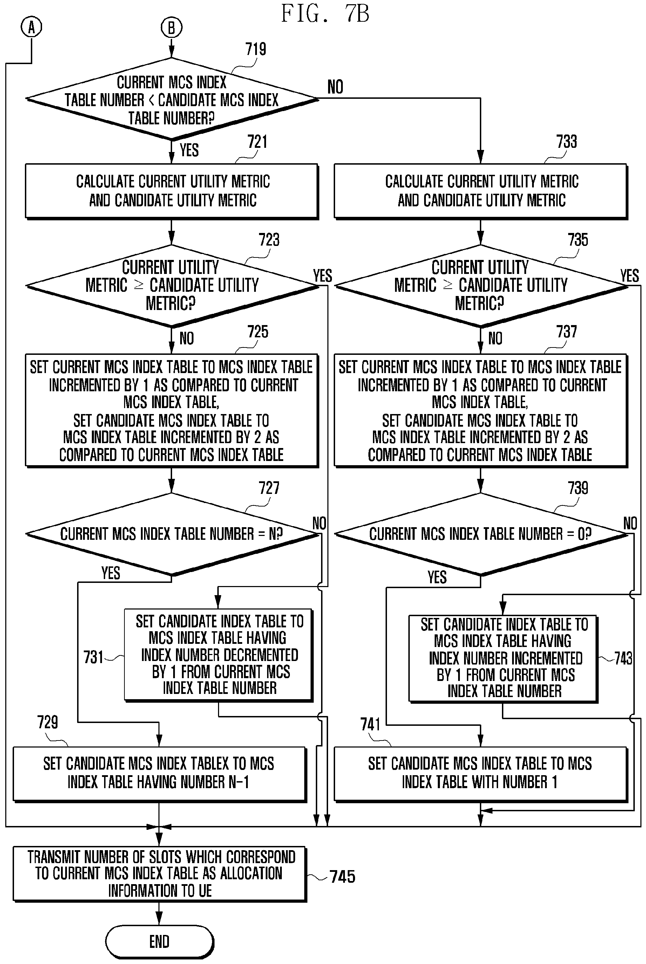

This procedure is described in more detail with reference to FIGs. 7a and 7b.

FIGs. 7a and 7b are a flowchart illustrating the dynamic UL resource allocation method according to another embodiment of the present disclosure. In FIGs. 7a and 7b, the description is made under the assumption that there is on candidate MCS index table by taking notice of the computing capability of the control unit 340. Also, it is assumed that total N+1 MCS index tables each assigned MCS index table numbers of from 0 to N.

The control unit 340 first calculates per-user MCS prediction result (MCS user i) and slot allocation prediction result (SchedulerSlot user i) using the current MCS index table at step 701. Simultaneously, the control unit 340 also calculates per-user MCS prediction result (MCS user i) and slot allocation prediction result (SchedulerSlot user i) using the candidate MCS index table and the procedure goes to step 703. Here, the MCS prediction result is the resource allocation amount for the user, and the slot allocation prediction result is the data amount transmittable per unit resource.

The control unit 340 determines whether the current MCS index table number is 0 and, if so, the procedure goes to step 705 and, otherwise, step 711. The control unit 340 calculates current utility metric using Equation (1) based on the per-user MCS and slot allocation prediction result acquired with the current MCS index table at step 705. The control unit 340 also calculates candidate utility metric using Equation (1) based on the per-user MCS and slot allocation prediction result acquired with the candidate MCS index table.

That is, ScheduleSlot$_{user}$ i corresponds to the resource allocation amount and MPR denotes the data amount transmittable per unit resource and, as a consequence, the utility metric is total data amount transmittable on the allocated resource according to Equation (1). If the utility metric increases, this means both the signal user through put and sector throughput increase.

The control unit 340 determines whether the current utility metric is equal to or greater than the candidate utility metric at step 707. If the current utility metric is equal to or greater than the candidate utility metric, the control unit 340 sends the MS the allocation information including the number of slots, which corresponds to the current MCS index table at step 745. Otherwise, if the current utility metric is less than the candidate utility metric, the control unit 340 changes the current MCS index table for the MCS index table 1 and the candidate MCS index table for the MCS index table 2 at step 70 and sends the MS the allocation information including the number of slots, which corresponds to the current MCS index table at step 745. At this time, since the current MCS index table is the least index table 0, the control unit 340 sets the MCS index table to the MCS index table 1 having the next index number and the candidate MCS index table to the MCS index table 2.

If the current MCS index table number is not 0 at step 703, the procedure goes to step 711. If the current index table number is N at step 711, the procedure goes to step 713 and, otherwise, step 719. The control unit 340 calculates the current utility metric and candidate utility metric at step 713 as described above and determines whether the current utility metric is equal to or greater than the candidate utility metric at step 715. If the current utility metric is equal to or greater than the candidate utility metric, the control unit 340 maintains the current MCS index table and candidate MCS index table and sends the number of slots, which corresponds to the current index table as the allocation information at step 745. Otherwise, if the current utility metric is less than the candidate utility metric, the control unit 340 changes the current MCS index table for MCS index table N-1 and the candidate MCS index table for MCS index table N-2 at step 717 and sends the MS the number of slots, which corresponds to the current MCS index table as the allocation information at step 745. At this time, since the current MCS index table is the greatest MCS index table number N, the control unit 340 changes the MCS index table for the MCS index table N-1 having the next greatest index number and the candidate MCS index table for the MCS index table N-2.

The control unit 340 determines whether the current MCS index table number is less than the candidate MCS index table number at step 719 and, if so, the procedure goes to step 721 and, otherwise, step 733.

The control unit 340 calculates the current utility metric and the candidate utility metric at step 721 as described above and determines whether the current utility metric is equal to or greater than the candidate utility metric at step 723. If the current utility metric is equal to or greater than the candidate metric, the control unit 340 decrements the candidate MCS index table number by 1 as Equation 2 at step 731 and sends the MS the number of slots, which corresponds to the current MCS index table as the allocation information at step 745.

$$\text{Candidate MCS index table No.} = \text{Current MCS index table No.} - 1$$

$$(2)$$

If the current utility metric is less than the candidate utility metric at step 721, the control unit 340 sets the current MCS index table to the MCS index table having the index number incremented by 1 from the current MCS index table number as Equation (3) and the candidate MCS index table to a MCS index table having the index number incremented by 2 from the current MCS index table number as Equation (4).

$$\text{Current MCS index table No.} = \text{Current MCS index table No.} + 1$$

$$(3)$$

$$\text{Candidate MCS index table No.} = \text{Current MCS index table No.} + 2$$

$$(4)$$

Afterward, the control unit 340 determines whether the current MCS index table is N at step 727 and, if the current MCS index table is not N, sends the MS the number of slots which corresponds to the current MCS index table as the allocation information at step 745. If the current MCS index table is N at step 727, the control unit 340 sets the candidate MCS index table to the MCS index table having the index numberN-1 at step 729 and sends the MS the number of slots which corresponding to the current MCS index table as the allocation information.

If the current MCS index table number is greater than the candidate MCS index table number at step 719, the control unit calculates the current utility metric and candidate utility metric at step 733 as described above and determines whether the current utility metric is equal to or greater than the candidate utility metric at step 735. If the current utility metric is equal to or greater than the candidate utility metric, the control unit sets the candidate MCS index table to a new MCS index table having the index number incremented by 1 at step 743 and sends the MS the number of slots which corresponds to the current MCS index table as the allocation information.

If the current utility metric is less than the candidate utility metric, the control unit 340 sets the current MCS index table to a new MCS index table having the index number increment by 1 from the current MCS index table number as Equation (6) and the candidate MCS index table to a new MCS index table having the index number increment by 2 as Equation (7) at step 737.

$$\text{Current MCS index table No.} = \text{Current MCS index table No.} + 1$$

$$(6)$$

$$\text{Candidate MCS index table No.} = \text{Current MCS index table No.} + 2$$

$$(7)$$

Afterward, the control unit 340 determines whether the current MCS index table is 0 at step 739 and, if the current MCS index table is not 0, sends the MS the number of slots which corresponds to the current MCS index table as allocation information at step 745. Otherwise, if the current MCS index table is 0 at step 739, the control unit sets the candidate MCS index table to a new MCS index table having the MCS index table number incremented by 1 at step 741 and sends the MS the number of slots which corresponds to the current MCS index table as allocation information at step 745.

As described above, the dynamic uplink resource allocation method and apparatus of the present disclosure is capable of determining the MCS level according to the MCS index index selected optimally in consideration of the number of users and uplink resource utilization ratio of the base station that are varying as time goes, thereby enhancing single user throughput and sector throughput and thus service quality.

Although the present disclosure has been described with an exemplary embodiment, various changes and modifications may be suggested to one skilled in the art.

**Claims**

1. A dynamic uplink resource allocation method performed by a base station in a wireless communication system, the method comprising:

receiving, from a mobile station, a report for an uplink transmission power;
performing (610) a normalization of the uplink transmission power;
determining (620) a first utility metric associated with a current modulation and coding scheme, MCS, table and at least one second utility metric associated with at least one second candidate MCS table;

determining (640) an MCS table among the current MCS table and the at least one second candidate MCS table based on comparing the first utility metric and the at least one second utility metric;

identifying (660) an MCS level based on the normalized uplink transmission power and the determined MCS table; and

transmitting, to the mobile station, information on resources, which are to be allocated, corresponding to the determined MCS table,

wherein the first utility metric indicates a total data amount transmittable on resources, which are to be allocated, corresponding to the current MCS table, and

wherein the at least one second utility metric indicates a total data amount transmittable on resources, which are to be allocated, corresponding to the at least one second candidate MCS table.

2. The method of claim 1, wherein the determining (640) the MCS table comprises:

determining whether the first utility metric is equal to or greater than the at least one second utility metric; and

determining, in case that the first utility metric is equal to or greater than the at least one second utility metric, the MCS table based on the current MCS table.

3. The method of claim 2, further comprising:

determining, in case that the first utility metric is less than the at least one second utility metric, the MCS table among the at least one second candidate MCS table, which fulfills a predetermined condition.

4. The method of claim 2, wherein the first utility metric and the at least one second utility metric are determined by an equation:

$$UtilityMetric = \sum_{user\ i} (ScheduleSlot)_{user\ i} \times (MPR\ [MCS_{user\ i}])$$

where $ScheduleSlot_{user\ i}$ indicates a per-user slot allocation prediction result, and $MPR[MCS_{user\ i}]$ indicates a modulation order product coding rate, MPR, corresponding to a per-user MCS level.

5. The method of claim 1, the method further comprising:

identifying (670), after identifying (660) the MCS level, a next frame candidate MCS table to be compared with the determined MCS table.

6. The method of claim 5, wherein identifying (670) the next frame candidate MCS table comprises:

identifying whether the determined MCS table is different from the current MCS table; and

changing, in case that the determined MCS table is different from the current MCS table, the at least one second candidate MCS table to at least one new candidate MCS table based on the determined MCS table.

7. The method of claim 6, wherein changing the at least one second candidate MCS table comprises:

changing, in case that the determined MCS table has an MCS level lower than the current MCS table, the at least one second candidate MCS table to have a lower MCS level; and

changing, in case that the determined MCS table has an MCS level higher than the current MCS table, the at least one second candidate MCS table to have a higher MCS level.

8. The method of claim 6, wherein identifying the next frame candidate MCS table comprises skipping changing, in case that the determined MCS table is not different from the current MCS table, the at least one second candidate MCS table.

9. A base station performing dynamic uplink resource allocation in a wireless communication system, the base station comprising:

a storage unit (330) configured to store at least one modulation and coding scheme, MCS, table;

a transceiver (310); and
a controller (340) coupled with the transceiver (310) and configured to:

control the transceiver (310) to receive, from a mobile station, a report for an uplink transmission power;
perform a normalization of the uplink transmission power,
determine a first utility metric associated with a current MCS table and at least one second utility metric associated with at least one second candidate MCS table,
determine an MCS table among the current MCS table and the at least one second candidate MCS table based on comparing the first utility metric and the at least one second utility metric,
identify an MCS level based on the normalized uplink transmission power and the determined MCS table, and
control the transceiver (310) to transmit, to the mobile station, information on resources, which are to be allocated, corresponding to the determined MCS table,
wherein the first utility metric indicates a total data amount transmittable on resources, which are to be allocated, corresponding to the current MCS table, and
wherein the at least one second utility metric indicates a total data amount transmittable on resources, which are to be allocated, corresponding to the at least one second candidate MCS table.

10. The apparatus of claim 9, wherein the controller (340) is configured to:

determine whether the first utility metric is equal to or greater than the at least one second utility metric, and
determine, in case that the first utility metric is equal to or greater than the at least one second utility metric, the MCS table based on the current MCS table.

11. The apparatus of claim 10, wherein the controller (340) is further configured to:
determine, in case that the first utility metric is less than the at least one second utility metric, the MCS table among the at least one second candidate MCS table, which fulfills a predetermined condition.

12. The apparatus of claim 10, wherein the first utility metric and the at least one second utility metric are determined by an equation:

$$UtilityMet\ ric = \sum_{user\ i} (ScheduleSl\ ot)_{user\ i} \times (MPR\ [MCS_{user\ i}])$$

where ScheduleSlot$_{user\ i}$ indicates a per-user slot allocation prediction result, and MPR[MCS$_{user\ i}$] indicates a modulation order product coding rate, MPR, corresponding to a per-user MCS level.

13. The apparatus of claim 9, wherein the controller (340) is further configured to:
identify a next frame candidate MCS table to be compared with the determined MCS table.

14. The apparatus of claim 13, wherein the controller (340) is configured to:

identify whether the determined MCS table is different from the current MCS table, change, in case that the determined MCS table is different from the current MCS table, the at least one second candidate MCS table to at least one new candidate MCS table based on the determined MCS table, and
skip changing, in case that the determined MCS table is not different from the current MCS table, the at least one second candidate MCS table.

15. The apparatus of claim 14, wherein the controller (340) is configured to:

change, in case that the determined MCS table has an MCS level lower than the current MCS table, the at least one second candidate MCS table to have a lower MCS level, and
change, in case that the determined MCS table has an MCS level higher than the current MCS table, the at least one second candidate MCS table to have a higher MCS level.

**Patentansprüche**

1. Verfahren zur dynamischen Uplink-Ressourcenzuweisung, welches von einer Basisstation in einem drahtlosen Kommunikationssystem ausgeführt wird, wobei das Verfahren Folgendes umfasst:

Empfangen eines Berichts für eine Uplink-Übertragungsleistung von einer Mobilstation;
Ausführen (610) einer Normalisierung der Uplink-Übertragungsleistung;
Bestimmen (620) einer ersten Nutzmetrik, die mit einer aktuellen Modulations- und Codierschema(MCS)-Tabelle assoziiert ist, und mindestens einer zweiten Nutzmetrik, die mit mindestens einer zweiten Kandidaten-MCS-Tabelle assoziiert ist;
Bestimmen (640) einer MCS-Tabelle aus der aktuellen MCS-Tabelle und der mindestens einen zweiten Kandidaten-MCS-Tabelle basierend auf dem Vergleichen der ersten Nutzmetrik und der mindestens einen zweiten Nutzmetrik;
Identifizieren (660) eines MCS-Pegels basierend auf der normalisierten Uplink-Übertragungsleistung und der bestimmten MCS-Tabelle; und
Übertragen von Informationen über Ressourcen, die zuzuweisen sind, die der bestimmten MCS-Tabelle entsprechen, an die Mobilstation,
wobei die erste Nutzmetrik eine gesamte Datenmenge angibt, die auf Ressourcen übertragbar ist, die zuzuweisen sind, die der aktuellen MCS-Tabelle entsprechen, und
wobei die mindestens eine zweite Nutzmetrik eine gesamte Datenmenge angibt, die auf Ressourcen übertragbar ist, die zuzuweisen sind, die der mindestens einen zweiten Kandidaten-MCS-Tabelle entsprechen.

2. Verfahren nach Anspruch 1, wobei das Bestimmen (640) der MCS-Tabelle Folgendes umfasst:

Bestimmen, ob die erste Nutzmetrik gleich oder größer als die mindestens eine zweite Nutzmetrik ist; und
Bestimmen, falls die erste Nutzmetrik gleich oder größer als die mindestens eine zweite Nutzmetrik ist, der MCS-Tabelle basierend auf der aktuellen MCS-Tabelle.

3. Verfahren nach Anspruch 2, welches ferner Folgendes umfasst:
Bestimmen, falls die erste Nutzmetrik kleiner als die mindestens eine zweite Nutzmetrik ist, der MCS-Tabelle aus der mindestens einen zweiten Kandidaten-MCS-Tabelle, die eine vorbestimmte Bedingung erfüllt.

4. Verfahren nach Anspruch 2, wobei die erste Nutzmetrik und die mindestens eine zweite Nutzmetrik durch eine Gleichung bestimmt werden:

$$UtilityMetric \; = \sum_{user\;i} (ScheduleSlot\;)_{user\;i} \times (MPR\,[MCS_{user\;i}])$$

wobei ScheduleSlot$_{user\;i}$ ein Slotzuteilungs-Vorhersageergebnis pro Benutzer angibt und MPR[MCS$_{user\;i}$] eine Modulationsordnungs-Produktcodierrate, MPR, angibt, die einem MCS-Pegel pro Benutzer entspricht.

5. Verfahren nach Anspruch 1, wobei das Verfahren ferner Folgendes umfasst:
Identifizieren (670), nach dem Identifizieren (660) des MCS-Pegels, einer nächsten Rahmenkandidaten-MCS-Tabelle, die mit der bestimmten MCS-Tabelle zu vergleichen ist.

6. Verfahren nach Anspruch 5, wobei das Identifizieren (670) der nächsten Rahmenkandidaten-MCS-Tabelle Folgendes umfasst:

Identifizieren, ob sich die bestimmte MCS-Tabelle von der aktuellen MCS-Tabelle unterscheidet; und
Ändern, falls sich die bestimmte MCS-Tabelle von der aktuellen MCS-Tabelle unterscheidet, der mindestens einen zweiten Kandidaten-MCS-Tabelle in mindestens eine neue Kandidaten-MCS-Tabelle basierend auf der bestimmten MCS-Tabelle.

7. Verfahren nach Anspruch 6, wobei das Ändern der mindestens einen zweiten Kandidaten-MCS-Tabelle Folgendes umfasst:

Ändern, falls die bestimmte MCS-Tabelle einen niedrigeren MCS-Pegel als die aktuelle MCS-Tabelle hat, der mindestens einen zweiten Kandidaten-MCS-Tabelle, um einen niedrigeren MCS-Pegel zu haben; und
Ändern, falls die bestimmte MCS-Tabelle einen höheren MCS-Pegel als die aktuelle MCS-Tabelle hat, der mindestens einen zweiten Kandidaten-MCS-Tabelle, um einen höheren MCS-Pegel zu haben.

8. Verfahren nach Anspruch 6, wobei das Identifizieren der nächsten Rahmenkandidaten-MCS-Tabelle das Überspringen des Änderns der mindestens einen zweiten Kandidaten-MCS-Tabelle umfasst, falls sich die bestimmte MCS-Tabelle nicht von der aktuellen MCS-Tabelle unterscheidet.

9. Basisstation zum Ausführen einer dynamischen Uplink-Ressourcenzuweisung in einem drahtlosen Kommunikationssystem, wobei die Basisstation Folgendes umfasst:

   eine Lagereinheit (330), die konfiguriert ist, um mindestens eine Modulations- und Codierschema(MCS)-Tabelle zu speichern;
   einen Transceiver (310); und
   eine Steuerung (340), die mit dem Transceiver (310) gekoppelt und konfiguriert ist zum:

      Steuern des Transceivers (310), um einen Bericht für eine Uplink-Übertragungsleistung von einer Mobilstation zu empfangen;
      Ausführen einer Normalisierung der Uplink-Übertragungsleistung,
      Bestimmen einer ersten Nutzmetrik, die mit einer aktuellen MCS-Tabelle assoziiert ist, und mindestens einer zweiten Nutzmetrik, die mit mindestens einer zweiten Kandidaten-MCS-Tabelle assoziiert ist,
      Bestimmen einer MCS-Tabelle aus der aktuellen MCS-Tabelle und der mindestens einen zweiten Kandidaten-MCS-Tabelle basierend auf dem Vergleichen der ersten Nutzmetrik und der mindestens einen zweiten Nutzmetrik,
      Identifizieren eines MCS-Pegels basierend auf der normalisierten Uplink-Übertragungsleistung und der bestimmten MCS-Tabelle, und
      Steuern des Transceivers (310), um Informationen über Ressourcen, die zuzuweisen sind, die der bestimmten MCS-Tabelle entsprechen, an die Mobilstation zu übertragen,
      wobei die erste Nutzmetrik eine gesamte Datenmenge angibt, die auf Ressourcen übertragbar ist, die zuzuweisen sind, die der aktuellen MCS-Tabelle entsprechen, und
      wobei die mindestens eine zweite Nutzmetrik eine gesamte Datenmenge angibt, die auf Ressourcen übertragbar ist, die zuzuweisen sind, die der mindestens einen zweiten Kandidaten-MCS-Tabelle entsprechen.

10. Vorrichtung nach Anspruch 9, wobei die Steuerung (340) konfiguriert ist zum:

    Bestimmen, ob die erste Nutzmetrik gleich oder größer als die mindestens eine zweite Nutzmetrik ist, und
    Bestimmen, falls die erste Nutzmetrik gleich oder größer als die mindestens eine zweite Nutzmetrik ist, der MCS-Tabelle basierend auf der aktuellen MCS-Tabelle.

11. Vorrichtung nach Anspruch 10, wobei die Steuerung (340) ferner konfiguriert ist zum:
    Bestimmen, falls die erste Nutzmetrik kleiner als die mindestens eine zweite Nutzmetrik ist, der MCS-Tabelle aus der mindestens einen zweiten Kandidaten-MCS-Tabelle, die eine vorherbestimmte Bedingung erfüllt.

12. Vorrichtung nach Anspruch 10, wobei die erste Nutzmetrik und die mindestens eine zweite Nutzmetrik durch eine

$$UtilityMet\ ric = \sum_{user\ i} (ScheduleSl\ ot)_{user\ i} \times (MPR\,[MCS_{user\ i}])$$

Gleichung bestimmt werden: wobei $ScheduleSlot_{user\ i}$ ein Slotzuteilungs-Vorhersageergebnis pro Benutzer angibt und $MPR[MCS_{user\ i}]$ eine Modulationsordnungs-Produktcodierrate, MPR, angibt, die einem MCS-Pegel pro Benutzer entspricht.

13. Vorrichtung nach Anspruch 9, wobei die Steuerung (340) ferner konfiguriert ist zum:
    Identifizieren einer nächsten Rahmenkandidaten-MCS-Tabelle, die mit der bestimmten MCS-Tabelle zu vergleichen ist.

14. Vorrichtung nach Anspruch 13, wobei die Steuerung (340) konfiguriert ist zum:

    Identifizieren, ob sich die bestimmte MCS-Tabelle von der aktuellen MCS-Tabelle unterscheidet,
    Ändern, falls sich die bestimmte MCS-Tabelle von der aktuellen MCS-Tabelle unterscheidet, der mindestens einen zweiten Kandidaten-MCS-Tabelle in mindestens eine neue Kandidaten-MCS-Tabelle basierend auf der bestimmten MCS-Tabelle, und
    Überspringen des Änderns, falls sich die bestimmte MCS-Tabelle nicht von der aktuellen MCS-Tabelle unterscheidet, der mindestens einen zweiten Kandidaten-MCS-Tabelle.

**15.** Vorrichtung nach Anspruch 14, wobei die Steuerung (340) konfiguriert ist zum:

Ändern, falls die bestimmte MCS-Tabelle einen niedrigeren MCS-Pegel als die aktuelle MCS-Tabelle hat, der mindestens einen zweiten Kandidaten-MCS-Tabelle, um einen niedrigeren MCS-Pegel zu haben, und
Ändern, falls die bestimmte MCS-Tabelle einen höheren MCS-Pegel als die aktuelle MCS-Tabelle hat, der mindestens einen zweiten Kandidaten-MCS-Tabelle, um einen höheren MCS-Pegel zu haben.

**Revendications**

**1.** Procédé d'attribution de ressources de liaison montante dynamique mis en œuvre par une station de base dans un système de communication sans fil, le procédé comprenant :

recevoir, à partir d'une station mobile, un rapport pour une puissance de transmission de liaison montante ;
effectuer (610) une normalisation de la puissance de transmission de liaison montante ;
déterminer (620) un première métrique utilitaire associée à un tableau de schémas de modulation et de codage, MCS, actuel et au moins une deuxième métrique utilitaire associée à au moins un deuxième tableau de MCS candidat ;
déterminer (640) un tableau de MCS parmi le tableau de MCS actuel et l'au moins un deuxième tableau de MCS candidat sur la base de la comparaison de la première métrique utilitaire et l'au moins une deuxième métrique utilitaire ;
identifier (660) un niveau de MCS sur la base de la puissance de transmission de liaison montante normalisée et du tableau de MCS déterminé ; et
transmettre, à la station mobile, des informations sur des ressources, qui doivent être attribuées, correspondant au tableau de MCS déterminé,
où la première métrique utilitaire indique une quantité totale de données transmissibles sur des ressources, qui doivent être attribuées, correspondant au tableau de MCS actuel, et
où l'au moins une deuxième métrique utilitaire indique une quantité totale de données transmissibles sur des ressources, qui doivent être attribuées, correspondant à l'au moins un deuxième tableau de MCS candidat.

**2.** Procédé selon la revendication 1, où la détermination (640) du tableau de MCS comprend :

déterminer si la première métrique utilitaire est égale ou supérieure à l'au moins une deuxième métrique utilitaire ; et
déterminer, dans le cas où la première métrique utilitaire serait égale ou supérieure à l'au moins une deuxième métrique utilitaire, le tableau de MCS sur la base du tableau de MCS actuel.

**3.** Procédé selon la revendication 2, comprenant en outre :
déterminer, dans le cas où la première métrique utilitaire serait inférieure à l'au moins une deuxième métrique utilitaire, le tableau de MCS parmi l'au moins un deuxième tableau de MCS candidat, qui remplit une condition prédéterminée.

**4.** Procédé selon la revendication 2, où la première métrique utilitaire et l'au moins une deuxième métrique utilitaire sont déterminées par une équation :

$$UtilityMetric \ = \sum_{user\ i} (ScheduleSlot\ )_{user\ i} \times (MPR\ [MCS\ _{user\ i}])$$

où ScheduleSlot$_{user\ i}$ indique un résultat de prédiction d'attribution de créneau par utilisateur, et MPR[MCS$_{user\ i}$] indique un taux de codage de produit d'ordre de modulation, MPR, correspondant à un niveau de MCS par utilisateur.

**5.** Procédé selon la revendication 1, le procédé comprenant en outre :
identifier (670), après avoir identifié (660) le niveau de MCS, un prochain tableau de MCS candidat de trame à être comparé au tableau de MCS déterminé.

**6.** Procédé selon la revendication 5, où l'identification (670) du prochain tableau de MCS candidat de trame comprend :

identifier si le tableau de MCS déterminé est différent du tableau de MCS actuel ; et
changer, dans le cas où le tableau de MCS déterminé serait différent du tableau de MCS actuel, l'au moins un deuxième tableau de MCS candidat en au moins un nouveau tableau de MCS candidat sur la base du tableau de MCS déterminé.

**7.** Procédé selon la revendication 6, où le changement de l'au moins un deuxième tableau de MCS candidat comprend :

changer, dans le cas où le tableau de MCS déterminé aurait un niveau de MCS inférieur au tableau de MCS actuel, l'au moins un deuxième tableau de MCS candidat pour avoir un niveau de MCS inférieur ; et
changer, dans le cas où le tableau de MCS déterminé aurait un niveau de MCS supérieur au tableau de MCS actuel, l'au moins un deuxième tableau de MCS candidat pour avoir un niveau de MCS supérieur.

**8.** Procédé selon la revendication 6, où l'identification du prochain tableau de MCS candidat de trame comprend omettre de changer, dans le cas où le tableau de MCS déterminé ne serait pas différent du tableau de MCS actuel, l'au moins un deuxième tableau de MCS candidat.

**9.** Station de base effectuant une attribution de ressources de liaison montante dynamique dans un système de communication sans fil, la station de base comprenant :

une unité de stockage (330) configurée pour stocker au moins un tableau de schéma de modulation et de codage, MCS ;
un émetteur-récepteur (310) ; et
un contrôleur (340) couplé à l'émetteur-récepteur (310) et configuré pour :

commander l'émetteur-récepteur (310) pour recevoir, à partir d'une station mobile, un rapport pour une puissance de transmission de liaison montante ;
effectuer une normalisation de la puissance de transmission de liaison montante,
déterminer une première métrique utilitaire associée à un tableau de MCS actuel et au moins une deuxième métrique utilitaire associée à au moins un deuxième tableau de MCS candidat,
déterminer un tableau de MCS parmi le tableau de MCS actuel et l'au moins un deuxième tableau de MCS candidat sur la base de la comparaison de la première métrique utilitaire et de l'au moins une deuxième métrique utilitaire,
identifier un niveau de MCS sur la base de la puissance de transmission de liaison montante normalisée et du tableau de MCS déterminé, et
commander l'émetteur-récepteur (310) pour transmettre, à la station mobile, des informations sur des ressources, qui doivent être attribuées, correspondant au tableau de MCS déterminé,
où la première métrique utilitaire indique une quantité totale de données transmissibles sur des ressources, qui doivent être attribuées, correspondant au tableau de MCS actuel, et
où l'au moins une deuxième métrique utilitaire indique une quantité totale de données transmissibles sur des ressources, qui doivent être attribuées, correspondant à l'au moins un deuxième tableau de MCS candidat.

**10.** Dispositif selon la revendication 9, où le contrôleur (340) est configuré pour :

déterminer si la première métrique utilitaire est égale ou supérieure à l'au moins une deuxième métrique utilitaire, et
déterminer, dans le cas où la première métrique utilitaire est égale ou supérieure à l'au moins une deuxième métrique utilitaire, le tableau de MCS sur la base du tableau de MCS actuel.

**11.** Dispositif selon la revendication 10, où le contrôleur (340) est configuré en outre pour :
déterminer, dans le cas où la première métrique utilitaire serait inférieure à l'au moins une deuxième métrique utilitaire, le tableau de MCS parmi l'au moins un deuxième tableau de MCS candidat, qui remplit une condition prédéterminée.

**12.** Dispositif selon la revendication 10, où la première métrique utilitaire et l'au moins une deuxième métrique utilitaire sont déterminées par une équation :

$$UtilityMet\ ric\ =\ \sum_{user\ i} (ScheduleSl\ ot)_{user\ i} \times (MPR\,[MCS_{user\ i}])$$

où $ScheduleSlot_{user\ i}$ indique un résultat de prédiction d'attribution de créneau par utilisateur, et $MPR[MCS_{user\ i}]$ indique un taux de codage de produit d'ordre de modulation, MPR, correspondant à un niveau de MCS par utilisateur.

13. Dispositif selon la revendication 9, où le contrôleur (340) est configuré en outre pour :
identifier un prochain tableau de MCS candidat de trame à être comparé au tableau de MCS déterminé.

14. Dispositif selon la revendication 13, où le contrôleur (340) est configuré pour :

identifier si le tableau de MCS déterminé est différent du tableau de MCS actuel,
changer, dans le cas où le tableau de MCS déterminé serait différent du tableau de MCS actuel, l'au moins un deuxième tableau de MCS candidat en au moins un nouveau tableau de MCS candidat sur la base du tableau de MCS déterminé, et
omettre de changer, dans le cas où le tableau de MCS déterminé ne serait pas différent du tableau de MCS actuel, l'au moins un deuxième tableau de MCS candidat.

15. Dispositif selon la revendication 14, où le contrôleur (340) est configuré pour :

changer, dans le cas où le tableau de MCS déterminé aurait un niveau de MCS inférieur au tableau de MCS actuel, l'au moins un deuxième tableau de MCS candidat pour avoir un niveau de MCS inférieur, et
changer, dans le cas où le tableau de MCS déterminé aurait un niveau de MCS supérieur au tableau de MCS actuel, l'au moins un deuxième tableau de MCS candidat pour avoir un niveau de MCS supérieur.

FIG. 1

UL MCS Level

Lowest MCS Level

UL MCS Table

Highest MCS Level

Normalized MS Tx Power

Increasing T x Power

EP 2 645 614 B1

EP 2 645 614 B1

FIG. 2

# FIG. 3

**300**

FIG. 4

NORMALIZED
TRANSMISSION POWER

410
>MCSThreshold[MCS 1][Tblindex]  YES → MCS Level 0

NO

420
>MCSThreshold[MCS 2][Tblindex]  YES → MCS Level 1

NO

430
>MCSThreshold[MCS 3][Tblindex]  YES → MCS Level 2

NO

•
•
•

440
>MCSThreshold[MCS X-1][Tblindex]  YES → MCS Level X-2

NO

450
>MCSThreshold[MCS X][Tblindex]  YES → MCS Level X-1

NO

MCS Level X

FIG. 5

| MCS index table (Tblindex) | 0 | 1 | ... | N |
|---|---|---|---|---|
| MCSThreshold[MCS 1] | | | | |
| MCSThreshold[MCS 2] | | | | |
| MCSThreshold[MCS 3] | | | | |
| ... | | | | |
| MCSThreshold[MCS X-1] | | | | |
| MCSThreshold[MCS X] | | | | |

# FIG. 6

NORMALIZE UL TRANSMISSION POWER — 610

↓

CALCULATE UTILITY METRIC PER MCS INDEX TABLE — 620

↓

CURRENT UTILITY METRIC ≥ CANDIDATE UTILITY METRIC? — 630

YES →

NO ↓

SELECT MCS INDEX TABLE HAVING CANDIDATE UTILITY METRIC FULFILLING PREDETERMINED CONDITION — 640

↓

CHANGE CURRENT MCS INDEX TABLE FOR SELECTED MCS INDEX TABLE — 650

↓

DETERMINE MCS LEVEL — 660

↓

DETERMINE CANDIDATE MCS INDEX TABLE OF NEXT FRAME — 670

↓

END

# FIG. 7A

```
┌─────────────────────────────────┐
│ DETERMINE PER-USER SLOT ALLOCATION WITH │
│        CURRENT MCS TABLE,               │
│ DETERMINE PER-USER SLOT ALLOCATION      │  ~701
│     WITH CANDIDATE MCS TABLE            │
└─────────────────────────────────┘
```

703 — CURRENT MCS INDEX TABLE NUMBER = 0? — NO → 711 — CURRENT MCS INDEX TABLE NUMBER = N? — NO

YES ↓ 705      YES ↓ 713

CALCULATE CURRENT UTILITY METRIC AND CANDIDATE UTILITY METRIC     CALCULATE CURRENT UTILITY METRIC AND CANDIDATE UTILITY METRIC

707 — CURRENT UTILITY METRIC ≥ CANDIDATE UTILITY METRIC? — YES     715 — CURRENT UTILITY METRIC ≥ CANDIDATE UTILITY METRIC? — YES

NO ↓ 709      NO ↓ 717

SET CURRENT MCS INDEX TABLE TO MCS INDEX TABLE 1, SET CANDIDATE INDEX TABLE TO MCS INDEX TABLE 2     SET CURRENT MCS INDEX TABLE TO MCS INDEX TABLE N-1, SET CANDIDATE MCS INDEX TABLE TO MCS INDEX TABLE N-2

Ⓐ          Ⓑ

## FIG. 7B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010216472 A1